(19) Europäisches Patentamt
European Patent Office
Office européen des brevets

(11) Publication number: **0 149 268 A2**

(12) **EUROPEAN PATENT APPLICATION**

(21) Application number: 84201746.9

(22) Date of filing: 28.11.84

(51) Int. Cl.$^4$: **A 01 N 37/38**
A 01 N 37/40, A 01 N 43/70
A 01 N 43/88, A 01 N 47/30
A 01 N 47/36
//(A01N37/38, 33:18),
(A01N37/40, 37:38),
(A01N43/70, 37:38),
(A01N43/88, 37:38),
(A01N47/30, 37:38),
(A01N47/36, 37:38)

(30) Priority: 14.12.83 GB 8333352
22.12.83 GB 8334253

(43) Date of publication of application:
24.07.85 Bulletin 85/30

(84) Designated Contracting States:
AT BE CH DE FR GB IT LI LU NL SE

(71) Applicant: SHELL INTERNATIONALE RESEARCH MAATSCHAPPIJ B.V.
Carel van Bylandtlaan 30
NL-2596 HR Den Haag(NL)

(72) Inventor: Raven, Clive Alan
Hemsby House Hearts Delight
Borden Nr. Sittingbourne Kent(GB)

(72) Inventor: Loftus, Lynn
2 Little Norwood Cottages Parsonage Lane
Bobbing Nr. Sittingbourne Kent(GB)

(74) Representative: Hunter, Keith Roger Ian et al,
4 York Road
London SE1 7NA(GB)

(54) **Herbicidal composition and method of combating plant growth.**

(57) A herbicidal composition which comprises a diphenyl ether oxime of formula I:-

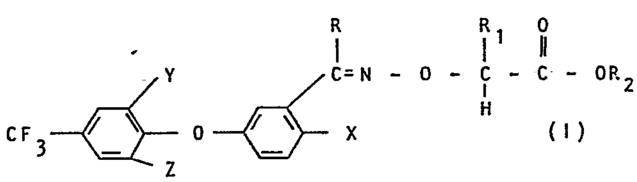

(I)

wherein X is a halogen atom or a nitro or cyano group; Y and Z are each a hydrogen or chlorine atom; R is hydrogen or alkyl of up to 3 carbon atoms; $R_1$ is hydrogen or methyl; and $R_2$ is hydrogen, alkyl of up to 10 carbon atoms, or an agronomically soluble salt ion, (hereinafter referred to as Compound A), together with at least one compound selected from:

i) 2-chloro-4-(1-cyano-1-methylethylamino-)-6-ethylamino 1,3,5-triazine

ii) 3-isopropyl-(1H)-benzo-2,1,3-thiadiazin-4-one 2,2-dioxide

iii) 1-(benzothiazol-2-yl)-1,3-dimethyl urea

iv) a compound which has the general formula II

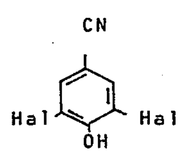

(II)

or is a salt or an ester thereof, wherein each Hal independently represents a chlorine, bromine, or iodine atom;

v) a compound which has the general formula III

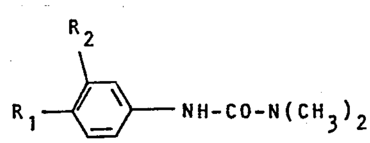

(III)

./...

EP 0 149 268 A2

wherein $R_2$ represents a chlorine atom and $R_1$ represents a chlorine atom or methyl or methoxy group, or $R_2$ represents a hydrogen atom and $R_1$ represents a chlorine atom or an isopropyl group; or

vi) a compound which has the general formula IV

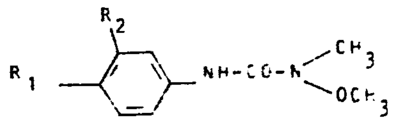

(IV)

wherein $R_1$ represents a chlorine or bromine atom and $R_2$ represents a hydrogen or chlorine atom.

vii) a compound which has the general formula V

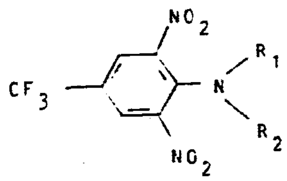

wherein $R_1$ and $R_2$, which may be the same or different, each represents an alkyl group together with a method of combating weeds by the application of such a composition.

viii) a compound which has the general formula VI:

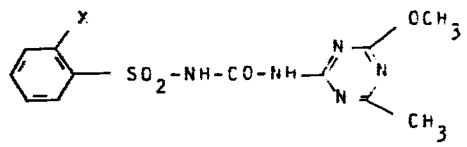

(VI)

wherein X represents a halogen, especially chlorine, atom or an alkoxycarbonyl group, preferably of 1-6 carbon atoms, especially a methoxycarbonyl group.

K 1943

Herbicidal Composition and
Method of Combating Plant Growth

This invention relates to herbicidal compositions and method of combating undesired plant growth.

Diphenyl ethers are an established class of herbicides, and O-substituted diphenyl ether oximes are disclosed for weed control in UK Patent Application No 2049695. It has now been found that the herbicidal activity of those diphenyl ether oximes can be enhanced by admixture with certain other types of herbicidal compounds, and thus that mixtures of such diphenyl ether oximes with certain herbicides exhibit an unexpected synergistic effect.

The invention therefore provides a herbicidal composition which comprises a diphenyl ether oxime of formula I:-

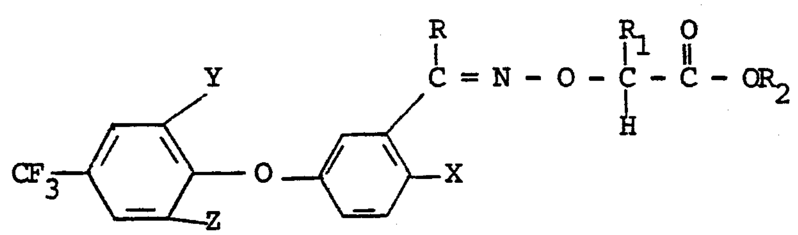

(I)

wherein X is a halogen atom or a nitro or cyano group;

Y and Z are each a hydrogen or chlorine atom; R is hydrogen or alkyl of up to 3 carbon atoms, $R_1$ is hydrogen or methyl; and $R_2$ is hydrogen, alkyl of up to 10 carbon atoms, or an agronomically soluble salt ion, (hereinafter referred to as Compound A), together with at least one compound selected from :

i) 2-chloro-4-(1-cyano-1-methylethylamino-)-6-ethylamino 1,3,5-triazine.

ii) 3-isopropyl-(1H)-benzo-2,1,3-thiadiazin-4-one 2,2-dioxide

iii) 1-(benzothiazol-2-yl)-1,3-dimethyl urea

iv) a compound which has the general formula II

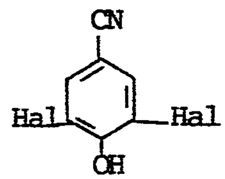

(II)

or is a salt or an ester thereof, wherein each Hal independently represents a chlorine, bromine, or iodine atom;

v) a compound which has the general formula III

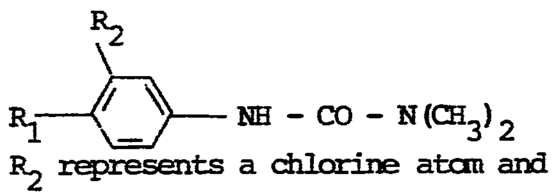

(III)

wherein $R_2$ represents a chlorine atom and $R_1$ represents a chlorine atom or methyl or methoxy group, or $R_2$ represents a hydrogen atom and $R_1$ represents a chlorine atom or an isopropyl group;

vi) a compound which has the general formula IV

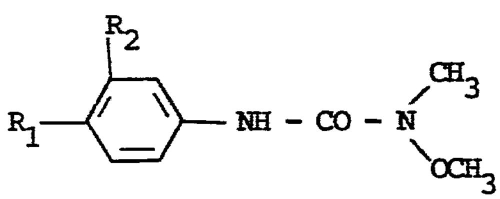

(IV)

wherein $R_1$ represents a chlorine or bromine atom and $R_2$ represents a hydrogen or chlorine atom;

vii) a compound which has the general formula V

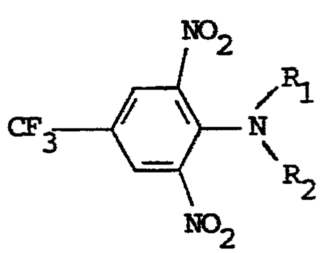

(V)

wherein $R_1$ and $R_2$, which may be the same or different, each represents an alkyl group, preferably of 1-6, and especially 1-4, carbon atoms.

viii) a compound which has the general formula VI:

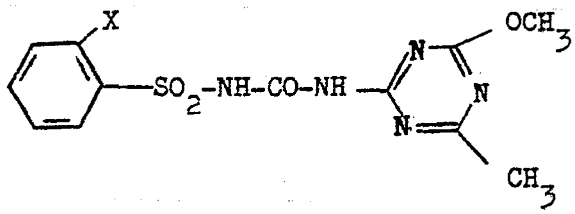

wherein X represents a halogen, especially chlorine, atom or an alkoxycarbonyl group, preferably of 1-6 carbon atoms, especially a methoxycarbonyl group.

The compositions according to the invention may contain two or more compounds within the scope of formula I (Compound(s) A) and/or two or more compounds within one of the groups (iv) to (viii), and/or two or more compound from different groups (i), to (viii) inclusive. Preferably, however, the compositions contain a single compound of formula I (Compound A) together with components selected from one only of groups (i) to (viii).

The invention further provides a method of combating undesired plant growth at a locus, which comprises applying to the locus a compound within formula I (Compound A) and at least one compound selected from groups (i) to (viii) defined above.

The preferred component of formula I (Compound A) is that wherein Y is hydrogen, Z is chlorine, X is nitro, R is methyl, $R_1$ is hydrogen and $R_2$ is methyl; viz 5-(2-chloro-4-trifluoromethylphenoxy)-2-nitro acetophenone oxime -O- acetic acid, methyl ester.

The compound of group (iv) is preferably one wherein, in formula II, each halogen atom is the same and is preferably an iodine or bromine atom. Such a compound may be the free phenol of formula II, or it may be a salt or an ester thereof. Suitable salts include alkali metal salts, especially the sodium or potassium salt, and amine salts. Suitable amine salts include, for example, those of amines having up to three organic groups attached to the nitrogen, the organic groups being, for example, alkyl groups having up to 10 carbon atoms and being optionally substituted by, for example, hydroxy groups or halogen atoms. Suitable esters are for example alkyl esters,

having for example up to 20, especially 6 to 12, carbon atoms in the alkyl moiety. Preferably, a compound (iv) is the free phenol or its octanoate ester.

The compound of group (v) is preferably one wherein, in formula III, $R_2$ represents a chlorine atom and $R_1$ represents a methyl group, or $R_2$ represents a hydrogen atom and $R_1$ represents an isopropyl group; viz 3-(3-chloro-p-tolyl)-1,1-dimethylurea, and 3-(4-isopropylphenyl)-1,1-dimethylurea.

The compound of group (vi) is preferably one wherein, in formula IV, $R_1$ and $R_2$ both represent a chlorine atom, viz 3-(3,4-dichlorophenyl)-1-methoxy-1-methylurea.

The compound of group (vii) is preferably one wherein, in formula V, $R_1$ and $R_2$ both represent a propyl group, or one represents an ethyl group and the other represents a butyl group; viz 2,6-dinitro-4-trifluoro-N,N-dipropylaniline and 2,6-dinitro-4-trifluoro-N-ethyl, N-butylaniline.

The compound of group (viii) is preferably one wherein, in formula VI, X represents chlorine or methoxycarbonyl, viz 1-(2-chlorophenylsulphonyl)-3-(4-methoxy-6-methyl-1,3,5-triazin-2-yl) urea, and its 2-methoxycarbonyl analogue.

The weight ratio of compound A to the compound selected from (i) to (viii) may vary widely depending on the intended application. Preferably said ratio is in the range of from 1:5000 to 1:1, preferably 1:1000 to 1:10. Suitably the dosage of compound A applied is in the range of from 0.0001 to 0.5 kg/ha.

The composition and method of the invention may be used for the control of weeds in a wide variety of crops, depending of course on the nature of the compound (i) to (viii). Typical crops include, for example, cotton, soyabean, plantation crops such as sugar cane or vines, and, especially, cereals such as wheat, barley, maize and sorghum. A wide range of broad leaved and grassy weeds are controlled. Application may be pre-emergence or post-emergence. For certain applications, especially when resistant weeds are present, it may be desirable also to apply a further herbicide. For example, if severe

infestations of wild oat are present in cereal crops, it may be advantageous to apply along with compound A and one or more compounds (i) to (viii), one of the N,N-disubstituted alanine derivatives which are specialised narrow spectrum herbicides and described in U.K. Patent No. 1,164,160, for example the ethyl ester of N-benzoyl-N-(3,4-dichlorophenyl)-2-aminopropionic acid, or the racemic mixture or laevo-rotatory isomer of the methyl or isopropyl ester of N-benzoyl-N-(3-chloro-4-fluorophenyl)-2-aminopropionic acid.

The composition of this invention will normally comprise a carrier in addition to the above defined active ingredients. A carrier in a composition according to the invention is any material with which the active ingredient is formulated to facilitate application to the locus to be treated, which may for example be a plant, seed or soil, or to facilitate storage, transport or handling. A carrier may be a solid or a liquid, including a material which is normally gaseous but which has been compressed to form a liquid, and any of the carriers normally used in formulating herbicidal compositions may be used. Preferably compositions according to the invention contain 0.5 to 95% by weight of active ingredient.

Suitable solid carriers include natural and synthetic clays and silicates, for example natural silicas such as diatomaceous earths; magnesium silicates, for example talcs; magnesium aluminium silicates, for example attapulgites and vermiculites; aluminium silicates, for example kaolinites, montomorillonites and micas; calcium carbonate; calcium sulphate; ammonium sulphate; synthetic hydrated silicon oxides and synthetic calcium or aluminium silicates; elements, for example carbon and sulphur; natural and synthetic resins, for example coumarone resins, polyvinyl chloride, and styrene polymers and copolymers; solid polychlorophenols; bitumen; waxes; and solid fertilisers, for example superphosphates.

Suitable liquid carriers include water; alcohols, for example isopropanol and glycols; ketones, for example acetone, methyl ethyl ketone, methyl isobutyl ketone and cyclohexanone;

ethers; aromatic or araliphatic hydrocarbons, for example benzene, toluene and xylene; petroleum fractions, for example kerosine and light mineral oils; chlorinated hydrocarbons, for example carbon tetrachloride, perchloroethylene and trichloroethane. Mixtures of different liquids are often suitable.

Agricultural compositions are often formulated and transported in a concentrated form which is subsequently diluted by the user before application. The presence of small amounts of a carrier which is a surface-active agent facilitates this process of dilution. Thus preferably at least one carrier in a composition according to the invention is a surface-active agent. For example the composition may contain at least two carriers, at least one of which is a surface-active agent.

A surface-active agent may be an emulsifying agent, a dispersing agent or a wetting agent; it may be nonionic or ionic. Examples of suitable surface-active agents include the sodium or calcium salts of polyacrylic acids and lignin sulphonic acids; the condensation of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohol or alkyl phenols, for example p-octylphenol or p-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates such as dodecylbenzene sulphonate; and polymers of ethylene oxide and copolymers of ethylene oxide and propylene oxide.

The compositions of the invention may for example be formulated as wettable powders, dusts, granules, solutions, emulsifiable concentrates, emulsions, suspension concentrates

and aerosols. Wettable powders usually contain 25, 50 or 75% w of active ingredient and usually contain in addition to solid inert carrier, 3-10% w of a dispersing agent and, where necessary, 0-10% w of stabiliser(s) and/or other additives such as penetrants or stickers. Dusts are usually formulated as a dust concentrate having a similar composition to that of a wettable powder but without a dispersant, and are diluted in the field with further solid carrier to give a composition usually containing ½-10% w of active ingredient. Granules are usually prepared to have a size between 10 and 100 BS mesh (1.676 - 0.152 mm), and may be manufactured by agglomeration or impregnation techniques. Generally, granules will contain ½-75% w active ingredient and 0-10% w of additives such as stabilisers, surfactants, slow release modifiers and binding agents. The so-called "dry flowable powders" consist of relatively small granules having a relatively high concentration of active ingredient. Emulsifiable concentrates usually contain, in addition to a solvent and, when necessary, co-solvent, 1-50% w/v active ingredient, 2-20% w/v emulsifiers and 0-20% w/v of other additives such as stabilisers, penetrants and corrosion inhibitors. Suspension conentrates are usually compounded so as to obtain a stable, non-sedimenting flowable product and usually contain 10-75% w active ingredient, 0.5-15% w of dispersing agents, 0.1-10% w of suspending agents such as protective colloids and thixotropic agents, 0-10% w of other additives such as defoamers, corrosion inhibitors, stabilisers, penetrants and stickers, and water or an organic liquid in which the active ingredient is substantially insoluble; certain organic solids or inorganic salts may be present dissolved in the formulation to assist in preventing sedimentation or as anti-freeze agents for water.

Aqueous dispersions and emulsions, for example compositions obtained by diluting a wettable powder or a concentrate according to the invention with water, also lie within the scope of the invention. The said emulsions may be of the water-in-oil or of the oil-in-water type, and may have a thick 'mayonnaise'-like consistency.

The composition of the invention may also contain other ingredients, for example other compounds possessing herbicidal, insecticidal or fungicidal properties.

The following Examples illustrate the invention.

General Procedure

The tests conducted were either foliar (post-emergence) spray tests, in which seedling plants were sprayed with a formulation containing the test compound, or pre-emergence tests in which soil sown with seeds of the test species is sprayed with the test formulation. Various test plant species were used, including wheat, rye grass, speedwell, chicory, annual meadowgrass, field pansy, and corn marigold.

The soil used in the tests was a prepared horticultural loam, irrigated throughout the test period via capillary matting.

The formulations used in the tests were prepared from solutions of the test compound or mixture in acetone containing 0.2% by weight of an alkylphenol/ethylene oxide condensate available under the trade name TRITON X-155. The acetone solutions were diluted with an equal volume of water and the resulting formulations sprayed at an application volume of 600 l/ha at 4 different dosage levels designed to produce a range of responses. Three replicate pots were used for each treatment. Untreated seedling plants were used as controls for post emergence tests, and untreated, seeded soil as controls for pre-emergence tests.

At the specified number of days after treatment, phytotoxicity compared with the untreated control, was assessed visually on a 0 to 9 scale, 0 indicating no effect and 9 indicating death.

The results were subjected to a standard probit analysis by computer to calculate the dosage of each compound or mixture, in g/ha, required to kill 50% of the test species. This dosage is referred to as the $GID_{50}$ dosage. If a mixture of herbicides A and B act together in an additive way, one would expect the $GID_{50}$ values for A and B in the mixture to be given by the equations (i) and (ii) below:

$$GID_{50} \text{ of B in mixture} = \frac{a}{\alpha + \frac{a}{b}} \qquad (i)$$

$$GID_{50} \text{ of A in mixture} = (GID_{50} \text{ of B in mixture}) \times \alpha \qquad (ii)$$

where $a = GID_{50}$ of A used alone

$b = GID_{50}$ of B used alone

$\alpha$ = weight ratio of compound A to compound B in mixture.

If the measured $GID_{50}$ values are in fact <u>less</u> than the calculated values, the mixture is synergistic.

In all of the mixtures evaluated the Compound A was 5-(2-chloro-4-trifluoromethylphenoxy)-2-nitro acetophenone oxime-0-acetic acid, methyl ester. The results of the tests with different compounds as Compound B are given in the following Tables, which give the $GID_{50}$ values (in g/ha - except where noted-) observed, and in parantheses after these observed values the values calculated according to the above equations.

<u>Example 1</u>

This Example was a post-emergence evaluation carried out using as Compound B the following compound: 3-(4-isopropyl-phenyl)-1,1-dimethylurea (Isoproturon).

The results are set out in Table 1 below.

<u>TABLE 1</u>

| WHEAT (Assessment after 2 days) | | | RYEGRASS (Assessment after two days) | | |
|---|---|---|---|---|---|
| Mixture Ratio A:B | A | B | Mixture Ratio A:B | A | B |
| 1:0 | 0.16 (0.16) | - | 1:0 | 3.90 (3.90) | - |
| 1:16 | 0.042 (0.16) | 0.67 (2.55) | 1:8 | 3.67 (3.89) | 29.4 (31.2) |
| 1:32 | 0.166 (0.16) | 5.30 (5.11) | 1:16 | 2.59 (3.89) | 41.4 (62.3) |
| 1:64 | 0.041 (0.16) | 2.61 (10.90) | 1:32 | 1.91 (3.88) | 61.2 (124.5) |
| 1:128 | 0.11 (0.16) | 13.60 (19.80) | 1:64 | 1.17 (3.87) | 74.5 (246.5) |
| 1:0 | - | Inactive | 0:1 | - | 32800 (32800) |

| SPEEDWELL (Assessment after 2 days) | | |
|---|---|---|
| Mixture Ratio A:B | A | B |
| 1:0 | 0.56 (0.56) | - |
| 1:64 | 0.41 (0.55) | 26.1 (35.2) |
| 1:128 | 0.36 (0.54) | 45.6 (69.0) |
| 1:256 | 0.46 (0.53) | 118.1 (136.1) |
| 1:512 | 0.26 (0.50) | 131.0 (254.1) |
| 0:1 | - | 2560 (2560) |

| CHICORY (Assessment after two days) | | |
|---|---|---|
| Mixture Ratio A:B | A | B |
| 1:0 | 0.011 (0.011) | - |
| 1:4 | 0.0004 (0.011) | 0.0016 (0.044) |
| 1:8 | 0.0006 (0.011) | 0.0051 (0.093) |
| 1:16 | 0.0056 (0.011) | 0.089 (0.175) |
| 1:32 | 0.0046 (0.011) | 0.15 (0.36) |
| 0:1 | - | 45060 (45060) |

| CORN MARIGOLD (Assessment after 2 days) | | |
|---|---|---|
| Mixture Ratio A:B | A | B |
| 1:0 | 0.30 (0.30) | - |
| 1:32 | 0.11 (0.29) | 3.67 (9.96) |
| 1:64 | 0.17 (0.29) | 11.0 (19.2) |
| 1:128 | 0.12 (0.29) | 15.3 (37.5) |
| 1:256 | 0.18 (0.28) | 46.8 (75.0) |
| 0:1 | - | 1978 (1978) |

Example 2

This Example was a post-emergence evaluation carried out using as Compound B the following compounds: 3-(3-chloro-p-tolyl)-1,1-dimethylurea (chlortoluron). The results are set out in Table 2 below.

TABLE 2

| WHEAT 8 days after treatment | | | RYEGRASS 15 days after treatment | | |
|---|---|---|---|---|---|
| Mixture Ratio A:B | A | B | Mixture Ratio A:B | A | B |
| 1:0 | 2.11 (2.11) | 0 0 | 1:0 | 1.97 (1.97) | 0 0 |
| 1:64 | 1.35 (1.98) | 86.5 (127) | 1:4 | 0.58 (1.56) | 2.33 (6.22) |
| 1:128 | 1.90 (1.87) | 243.2 (240) | 1:8 | 0.30 (1.28) | 2.38 (10.28) |
| 1:256 | 1.95 (1.68) | 499 (430) | 1:16 | 0.45 (0.95) | 7.17 (15.24) |
| 1:512 | 0.83 (1.40) | 422 (715) | 1:32 | 3.35 (0.63) | 107.3 (20.11) |
| 0:1 | 0 0 | 2115 (2115) | 0:1 | 0 0 | 30 (30) |

Example 3

The Example was a post-emergence evaluation carried out using as Compound B the following compound: 3,5-dibromo-4-hydroxy benzonitrile (Bromoxynil).

The results are set out in Table 3 below.

TABLE 3

| WHEAT 1 day after treatment | | | SPEEDWELL 1 day after treatment | | |
|---|---|---|---|---|---|
| Mixture Ratio A:B | A | B | Mixture Ratio A:B | A | B |
| 1:0 | 0.87 (0.87) | - | 1:0 | 3.36 (3.36) | - |
| 1:2 | 0.43 (0.87) | 0.86 (1.74) | 1:32 | 0.45 (2.10) | 14.2 (67.2) |
| 1:4 | 0.75 (0.87) | 1.50 (3.48) | 1:64 | 0.69 (1.53) | 43.9 (97.7) |
| 1:8 | 0.80 (0.87) | 1.60 (6.96) | 1:128 | 0.48 (0.99) | 61.4 (126) |
| 1:16 | 1.69 (0.87) | 3.38 (13.92 | 1:256 | 0.50 (0.58) | 130 (148) |
| 0:1 | - | - | 0:1 | - | 180 (180) |

| CHICORY 1 day after treatment | | |
|---|---|---|
| Mixture Ratio A:B | A | B |
| 1:0 | 23.8 (23.8) | - |
| 1:4 | 1.7 (23.8) | 6.8 (95.2) |
| 1:8 | 0.54 (23.8) | 4.32 (190) |
| 1:16 | 9.68 (23.8) | 155 (380) |
| 1:32 | 30.1 (23.8) | 963 (762) |
| 0:1 | - | - |

Example 4

This Example was a pre-emergence evaluation carried out using as Compound B the following Compound: 2,6-dinitro-4-trifluoromethyl-N,N-dipropyl aniline (trifluralin). The results are set out in Table 4 below.

TABLE 4

| RYEGRASS (kg/ha) 9 days after treatment | | | SPEEDWELL (g/ha) 9 days after treatment | | |
|---|---|---|---|---|---|
| Mixture Ratio A:B | A | B | Mixture Ratio A:B | A | B |
| 1:0 | 0.13 (0.13) | 0 0 | 1:0 | 1.10 (1.1) | 0 - |
| 1:2 | 0.12 (0.12) | 0.24 (0.23) | 1:1 | 0.021 (0.9) | 0.021 (0.9) |
| 1:4 | 0.074 (0.10) | 0.30 (0.41) | 1:2 | 0.47 (0.76) | 0.94 (1.5) |
| 1:8 | 0.033 (0.086) | 0.27 (0.68) | 1:4 | 0.49 (0.59) | 2.0 (2.3) |
| 1:16 | 0.030 (0.064) | 0.47 (1.02) | 1:8 | 0.007 (0.4) | 0.057 (3.2) |
| 0:1 | 0 | 2.0 (2.0) | 0:1 | 0 0 | 5.0 (5.0) |

Example 5

This example was a post-emergence evaluation carried out using as Compound B the following compound:- 2-chloro-4-(1-cyano-1-methylethylamino)-6-ethylamino 1,3,5-triazine (cyanazine). The results are set out in Table 5 below.

TABLE 5

| WHEAT 14 days after treatment | | | RYEGRASS 20 Days after treatment | | |
|---|---|---|---|---|---|
| Mixture Ratio A:B | A | B | Mixture Ratio A:B | A | B |
| 1:0 | 10.58 (10.58) | 0 0 | 1:0 | 19.12 (19.12) | 0 0 |
| 1:4 | 5.68 (6.35) | 22.7 (25.39) | 1.2 | 11.18 (10.29) | 22.36 (20.58) |
| 1:8 | 3.55 (4.53) | 28.36 (36.27) | 1:4 | 3.65 (7.04) | 14.59 (28.15) |
| 1:16 | 2.94 (2.89) | 47.07 (46.16) | 1:8 | 5.73 (4.31) | 45.84 (34.50) |
| 1:32 | 1.54 (1.67) | 49.35 (53.44) | 1:16 | 2.01 (2.43) | 32.22 (38.88) |
| 0:1 | 0 0 | 63.46 (63.46) | 0:1 | 0 0 | 44.54 (44.54) |
| CHICORY 20 days after treatment | | | CORN MARIGOLD 20 Days after treatment | | |
| Mixture Ratio A:B | A | B | Mixture Ratio A:B | A | B |
| 1:0 | 6.01 (6.01) | 0 0 | 1:0 | 0.71 (0.71) | 0 0 |
| 1:2 | 2.03 (3.53) | 4.07 (7.07) | 1:8 | 0.47 (0.64) | 3.77 (5.08) |
| 1:4 | 2.01 (2.50) | 8.03 (10.01) | 1:16 | 0.50 (0.58) | 7.99 (9.20) |
| 1:8 | 1.91 (1.58) | 15.30 (12.65) | 1:3 | 20.42 (0.48) | 13.49 (15.46) |
| 1:16 | 0.91 (0.91) | 14.49 (14.56) | 1:6 | 40.19 (0.37) | 12.13 (23.43) |
| 0:1 | 0 0 | 17.16 (17.16) | 0:1 | 0 0 | 48.35 (48.35) |

Example 6

This example was a pre-emergence evaluation carried out using as Compound B the following compound:- 3-(3,4-dichlorophenyl)-1-methoxy-1-methylurea (Linuron). The results are set out in Table 6 below.

TABLE 6

| WHEAT (kg/ha) 8 days after treatment | | | RYEGRASS (kg/ha) 8 Days after treatment | | |
|---|---|---|---|---|---|
| Mixture Ratio A:B | A | B | Mixture Ratio A:B | A | B |
| 1:0 | .059 (.059) | 0 0 | 1:0 | .017 (.017) | 0 0 |
| 1:2 | .046 (.059) | .091 (.12) | 2:1 | .014 (.017) | .007 (.008) |
| 1:4 | .044 (.059) | .18 (.24) | 1:1 | .013 (.017) | .013 (.017) |
| 1:8 | .032 (.059) | .26 (.47) | 1:2 | .011 (.016) | .022 (.033) |
| 1:16 | .025 (.059) | .40 (.94) | 1:4 | .010 (.016) | .041 (.062) |
| 0:1 | 0 0 | 234.2 (234.2) | 0:1 | 0 0 | .76 (.76) |

| CHICORY 15 days after treatment | | |
|---|---|---|
| Mixture Ratio A:B | A | B |
| 1:0 | 2.63 (2.63) | 0 0 |
| 1:1 | 1.43 (2.02) | 1.43 (2.02) |
| 1:2 | 0.92 (1.63) | 1.83 (3.27) |
| 1:4 | 0.95 (1.18) | 3.82 (4.74) |
| 1:8 | 1.21 (0.76) | 9.67 (6.12) |
| 0:1 | 0 0 | 8.62 (8.62) |

Example 7

This example was a post-emergence evaluation carried out using as Compound B the following compound: 3-isopropyl-(1H)-benzo-2,1,3-thiadiazin-4-one 2,2-dioxide (bentazone). The results are set out in Table 7 below.

Table 7

| WHEAT 12 days after treatment | | | RYEGRASS 12 Days after treatment | | |
|---|---|---|---|---|---|
| Mixture Ratio A:B | A | B | Mixture Ratio A:B | A | B |
| 1:0 | 6.09(6.09) | 0 0 | 1:0 | 5.01(5.01) | 0 0 |
| 1:10 | 3.03(6.09) | 30.3(60.9) | 1:10 | 3.56(5.01) | 35.6(50.1) |
| 1:20 | 3.11(6.09) | 62.2(121.8) | 1:20 | 4.34(5.01) | 86.8(100.7) |
| 1:40 | 5.21(6.09) | 208.4(243.6) | 1:40 | 4.60(5.01) | 184.0(200.4) |
| 1:80 | 3.18(6.09) | 254.4(487.2) | 1:80 | 5.51(5.01) | 440.8(400.8) |
| 0:1 | 0 0 | (679.5) (679.5) | 0:1 | 0 0 | (476.6) (476.6) |

| SPEEDWELL 19 days after treatment | | | CHICORY 12 Days after treatment | | |
|---|---|---|---|---|---|
| Mixture Ratio A:B | A | B | Mixture Ratio A:B | A | B |
| 1:0 | .83(.83) | 0 0 | 1:0 | .64(.64) | 0 0 |
| 1:256 | .39(.66) | 99.96(168.7) | 1:32 | .24(.50) | 7.56(15.85) |
| 1:512 | .39(.55) | 199.7(279.8) | 1:64 | .23(.40) | 14.57(25.86) |
| 1:1024 | .43(.41) | 443.6(417.1) | 1:128 | .15(.30) | 19.52(37.79) |
| 1:2048 | .22(.27) | 447.8(552.8) | 1:256 | .10(.19) | 26.05(49.11) |
| 0:1 | 0 0 | 819.2(819.2) | 0:1 | 0 0 | 70.14(70.14) |

| CORN MARIGOLD 12 days after treatment | | |
|---|---|---|
| Mixture Ratio A:B | A | B |
| 1:0 | .32(.32) | 0 0 |
| 1:8 | .28(.31) | 2.25(2.44) |
| 1:16 | .27(.29) | 4.30(4.67) |
| 1:32 | .24(.27) | 7.63(8.59) |
| 1:64 | .25(.23) | 16.27(14.80) |
| 0:1 | 0 0 | 53.38(53.38) |

Example 8

This example was a post emergence evaluation carried out using as Compound B the following compound: 1-(benzothiazol-2-yl)-1,3- dimethylurea (methabenzthiazuron). The results are set out in Table 8 below.

TABLE 8

| SPEEDWELL 15 days after treatment | | | CHICORY 15 Days after treatment | | |
|---|---|---|---|---|---|
| Mixture Ratio A:B | A | B | Mixture Ratio A:B | A | B |
| 1:0 | .19(.19) | - - | 1:0 | .40(.40) | - - |
| 1:64 | .084(.14) | 2.69(4.51) | 1:64 | .12(.32) | 3.9(10.2) |
| 1:128 | .10(.11) | 6.68(7.16) | 1:128 | .17(.27) | 11.4(16.9) |
| 1:256 | .059(.08) | 7.65(10.14) | 1:256 | .12(.19) | 14.9(25.3) |
| 1:512 | .046(.05) | 11.7(12.8) | 1:512 | .064(.13) | 16.3(33.8) |
| 0:1 | - - | 17.4(17.4) | 0:1 | - - | 50.4(50.4) |

Example 9

This example was a post emergence evaluation carried out using as Compound B the following compound: methyl 2-[3-(4-methoxy-6-methyl-1,3,5-triazin-2-yl)ureidosulphonyl] benzoate (DPX-T 6376). The results were assessed 9 days after treatment, and are set out in Table 9 below.

TABLE 9

| Mixture Ratio A:B | ANNUAL MEADOWGRASS | | SPEEDWELL | |
|---|---|---|---|---|
| | A | B | A | B |
| 1:0 | 2.66 (2.66) | 0 (0) | 0.019 (0.019) | 0 (0) |
| 4:1 | 1.69 (2.32) | 1.69 (2.32) | 0.0084 (0.019) | 0.0021 (0.005) |
| 2:1 | 1.39 (2.05) | 2.79 (4.11) | 0.0068 (0.018) | 0.0034 (0.009) |
| 1:1 | 0.80 (1.67) | 3.18 (6.68) | 0.0074 (0.017) | 0.0074 (0.017) |
| 1:2 | 0.40 (1.22) | 3.20 (9.75) | 0.0092 (0.016) | 0.018 (0.032) |
| 0:1 | 0 (0) | 17.98 (17.98) | 0 (0) | 0.20 (0.20) |

| Mixture Ratio A:B | FIELD PANSY | |
|---|---|---|
| | A | B |
| 1:0 | 0.17 (0.17) | 0 (0) |
| 4:1 | 0.090 (0.17) | 0.045 (0.083) |
| 2:1 | 0.13 (0.16) | 0.13 (0.16) |
| 1:1 | 0.099 (0.15) | 0.20 (0.31) |
| 1:2 | 0.054 (0.14) | 0.22 (0.55) |
| 0:1 | 0 (0) | 2.98 (2.98) |

K 1943

CLAIMS

1. A herbicidal composition which comprises a diphenyl ether oxime of formula I:-

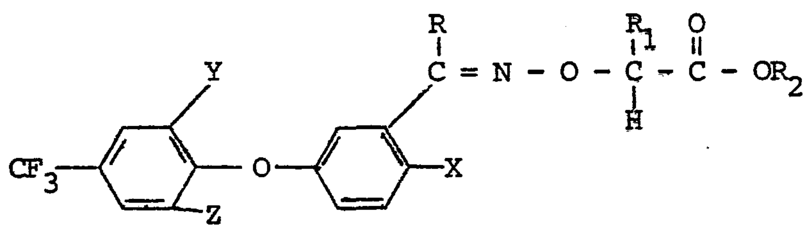

(I)

wherein X is a halogen atom or a nitro or cyano group; Y and Z are each a hydrogen or chlorine atom; R is hydrogen or alkyl of up to 3 carbon atoms; $R_1$ is hydrogen or methyl; and $R_2$ is hydrogen, alkyl of up to 10 carbon atoms, or an agronomically soluble salt ion, (hereinafter referred to as Compound A), together with at least one compound selected from:

i) 2-chloro-4-(1-cyano-1-methylethylamino-)-6-ethylamino 1,3,5-triazine

ii) 3-isopropyl-(1H)-benzo-2,1,3-thiadiazin-4-one 2,2-dioxide

iii) 1-(benzothiazol-2-yl)-1,3-dimethyl urea

iv) a compound which has the general formula II

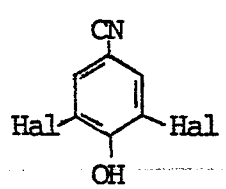

(II)

or is a salt or an ester thereof, wherein each Hal

or is a salt or an ester thereof, wherein each Hal independently represents a chlorine, bromine, or iodine atom;

v) a compound which has the general formula III

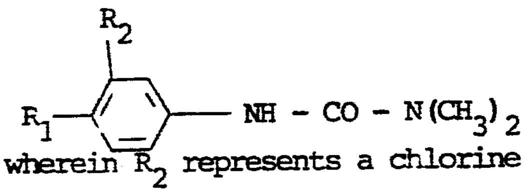

(III)

wherein $R_2$ represents a chlorine atom and $R_1$ represents a chlorine atom or methyl or methoxy group, or $R_2$ represents a hydrogen atom and $R_1$ represents a chlorine atom or an isopropyl group; or

vi) a compound which has the general formula IV

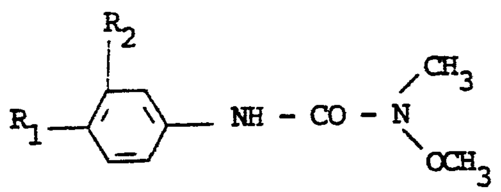

(IV)

wherein $R_1$ represents a chlorine or bromine atom and $R_2$ represents a hydrogen or chlorine atom.

vii) a compound which has the general formula V

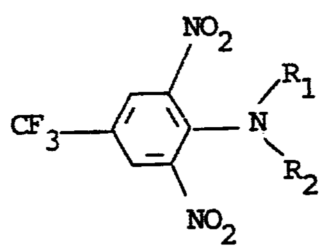

(V)

wherein $R_1$ and $R_2$, which may be the same or different, each represents an alkyl group.

viii) a compound which has the general formula VI:

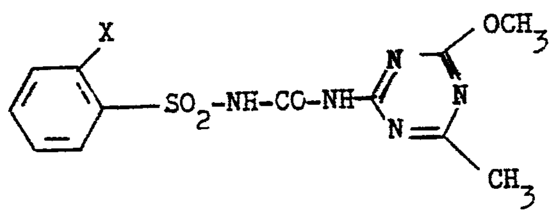

(VI)

wherein X represents a halogen atom or an alkoxycarbonyl group.

2. A composition as claimed in claim 1 wherein the compound of group (iv) is one in which, in formula II, the two halogen atoms are the same and are both bromine or both iodine.
3. A composition as claimed in claim 1 wherein the compound of group (v) is one in which, in formula III, $R_2$ represents a chlorine atom and $R_1$ represents a methyl gorup, or $R_2$ represents a hydrogen atom and $R_1$ represents an isopropyl group.
4. A composition as claimed in claim 1 wherein the compound of group (vi) is one in which, in formula IV, $R_1$ and $R_2$ both represent a chlorine atom.
5. A composition as claimed in claim 1 wherein the compound of group (vii) is one in which, in formula V, $R_1$ and $R_2$ both represent a propyl group, or one represents an ethyl group and the other represents a butyl group.
6. A composition as claimed in claim 1 wherein the compound of group (viii) is one in which, in formula VI, X represents a chlorine atom or a methoxycarbonyl group.
7. A composition as claimed in any one of claim 1-6 wherein the weight ratio of compound A to the compound (s) selected from groups (i) to (viii) is within the range of from 1:5000 to 1:1.
8. A composition as claimed in claim 7 wherein the weight ratio is from 1:1000 to 1:10.
9. A composition as claimed in any one of the preceding claims which comprises also one or more carriers.
10. A method of combating undesired plant growth at a locus, which comprises applying to the locus a compound within formula I as defined in claim 1 and at least one compound selected from groups (i) to (viii) as defined in any one of claims 1-6.
11. A method as claimed in in claim 10, in which the compounds are applied in the form of a composition as claimed in any one of claims 1-9.

12. A method as claimed in claim 10 or 11 wherein the locus treated is a crop area bearing plants or seeds of cereals.